# EUROPEAN PATENT SPECIFICATION

(11) **EP 1 677 071 B1**
(45) Date of publication and mention of the grant of the patent: **20.04.2011**
(21) Application number: 05000061.1
(22) Date of filing: 04.01.2005
(51) Int. Cl.: G01B 11/275

(54) **Multiple axle alignment method and device for trucks**
Achsenvermessungsverfahren und -vorrichtung für mehrachsige Lastkraftwagen
Procédé et dispositif pour l'alignement de plusieurs essieux d'un camion

(43) Date of publication of application: 05.07.2006
(73) Proprietor: Snap-on Equipment Srl a unico socio, 42015 Correggio (RE) (IT)
(72) Inventor: Braghiroli, Francesco, 42100 Reggio Emilia (IT)
(74) Representative: Eisenführ, Speiser & Partner

(56) References cited:
- EP-A- 0 769 676
- EP-A- 0 880 009
- FR-A- 2 830 932
- US-A- 4 800 651

## Description

The present invention relates to an intermediate aligner head for alignment of multiple axle vehicles, in particular to a respective alignment system and a respective alignment method therefore.

As to the art of wheel alignment, it is well known that proper total wheel alignment is a very important matter since misalignment of the wheels causes irregular and rapid tire wear, improper handling, excessive rolling resistance, as well as increased fuel consumption. Most of heavy-duty vehicles, also called trucks, have three or more axles. Normally, only one axle is steering, however, in some cases, two of the axles are steering; there are also vehicles, which have more than one driving axle, e.g. in case of two adjacent driving axles, these driving axles are also called tandem.

EP 0 769 676 describes a truck aligner with multiple wheel aligner heads, which are mountable on the wheels of a truck, wherein one head is mounted on each longitudinal side of a truck and the head is suitable for measurements in a forward direction and a reward direction.

In EP 0 880 009 a device for measuring of wheel angles is described, wherein the device is pivotable attached to a rear wheel of a vehicle and looking both on front wheel marker arrangements and a marker device arranged perpendicular relative the length direction of the vehicle.

The "classical" diagnosis data required in alignment of vehicles with four wheels are camber, toe, caster, and so forth, which have to be measured and controlled for proper alignment. In short, toe or individual toe is known as the angle drawn by a line drawn through a plane of one wheel referenced to the thrust line of the vehicle; in particular, toe-in is if the horizontal lines intersect in front of the wheel and toe-out means if the lines intersect behind the wheel. Camber describes the angle formed by the inward or outward tilt of the wheel referenced to a vertical line; in particular, camber is positive when the wheel is tilted outward at the top and is negative when the wheel is tilted inward at the top. Caster concerns the forward or reward tilt of the steering axes in reference to a vertical line; in particular, caster is positive when the top of the steering axis is tilted rearward and is negative when the tilt is forward.

Besides these afore-mentioned "classical" required diagnosis data there are further items to be measured and controlled. For instance, the tandem scrub angle is the angle formed by the two thrust lines of the two driving axles in a tandem. Thrust line is the bisector of the total toe angle of a rear axle and represents the direction the axle points compared to the centerline of the vehicle. The geometric centerline of a vehicle is a line drawn through the midpoints of the front axle and the rear reference axle. The so-called thrust angle is the angle formed by the geometric centerline and the thrust line of an axle. If the thrust angle of both rear axles is different, the result is a tandem axle parallelism problem commonly referred to as tandem scrub angle, axle skew, or tram. In motion, the steer axle must be turned to offset the push of this skewed axles to keep the vehicle moving straight. This will cause every tire on the vehicle to scrub. Aligning tandem axles together and then doing a stand-alone steer axle alignment only accomplishes part of the task. Not only must the steer axle total toe-in be correct, but it must be referenced to the thrust line of all the rear axles.

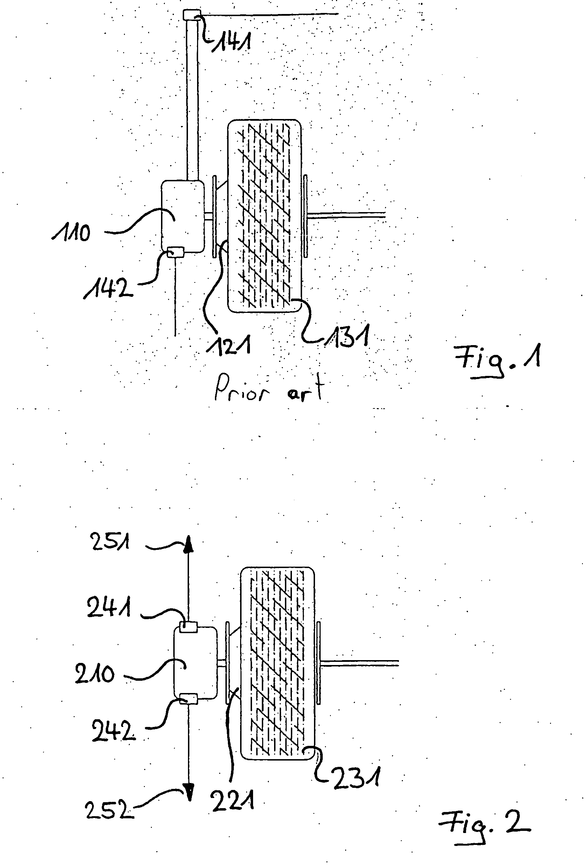

In the Fig. 1 is represented a conventional wheel aligner head 110 applied on a rim 121 of a wheel 131 of a motor vehicle (not shown); the wheel aligner head 110 comprises two optical sensors 141 and 142 for determining characteristic angles of the wheel 131. Each of the measuring sensors 141, 142 comprises two optical angle measurement functionalities.

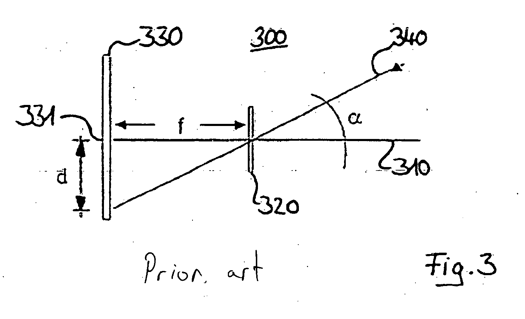

Fig. 3 shows very schematically the general principle of such optical angle measurement functionalities 300, which is schematically constituted by a linear image sensor 330, which comprises a line of photo-sensitive elements, and by an optical device 320, which may be a lens and has the task of training a light beam 340 on the photo sensitive elements of the linear image sensor 320 in the direction the angular measurement is to be made. In Fig. 3, the light beam 340 is coming from a light associated to the measuring sensor mounted on one of the wheels contiguous to the wheel on which another measuring sensor is mounted.

Reference letter f denotes the distance measured on the axis 310 between the optical device 320 and the linear image sensor 330, which corresponds to the focal distance in the case of an optical device 320 constituted by a lens. Reference letter d indicates the distance from the origin 331 of the scale of distances defined by the linear image sensor 330, the Greek reference letter α indicates the measured angle enclosed between the axis 310 and the direction of the light beam 340. A measurement device applying this optical measurement configuration for measuring angles is also known as goniometer. For further details regarding the optical angle measurement functionalities 300 and how it works reference is made to the laid open EP-A2-1 258 701 ""A process for reading fractions of an interval between contiguous photo-sensitive elements in a linear optical sensor".

The usual way to perform (wheel) alignment on multiple axles vehicles is to have four aligner heads, which are, for example, the afore-discussed CCD-sensor-type aligner heads comprising a total of six or eight optical sensors. These four aligner heads are attached to four wheels of two different axles, which can then be aligned. For each next axle of a vehicle having more then two axles a set or pair of two aligner heads is moved from one axle to another one to be aligned. Thus, the total alignment procedure is done step-by-step, i.e. axle-by-axle. This procedure is well known and, for instance, is usually described in user manuals of the state of the art truck wheel alignment equipment.

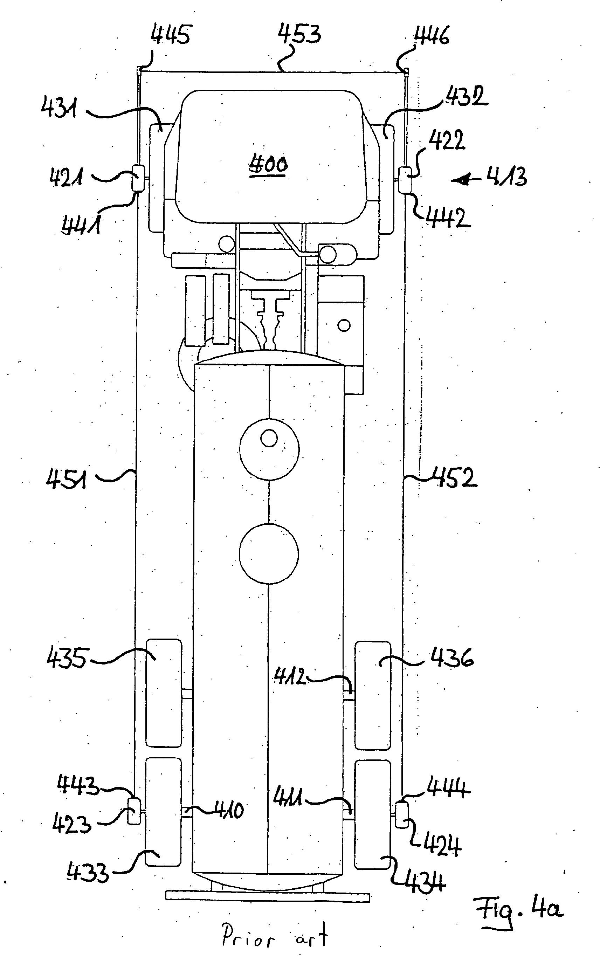

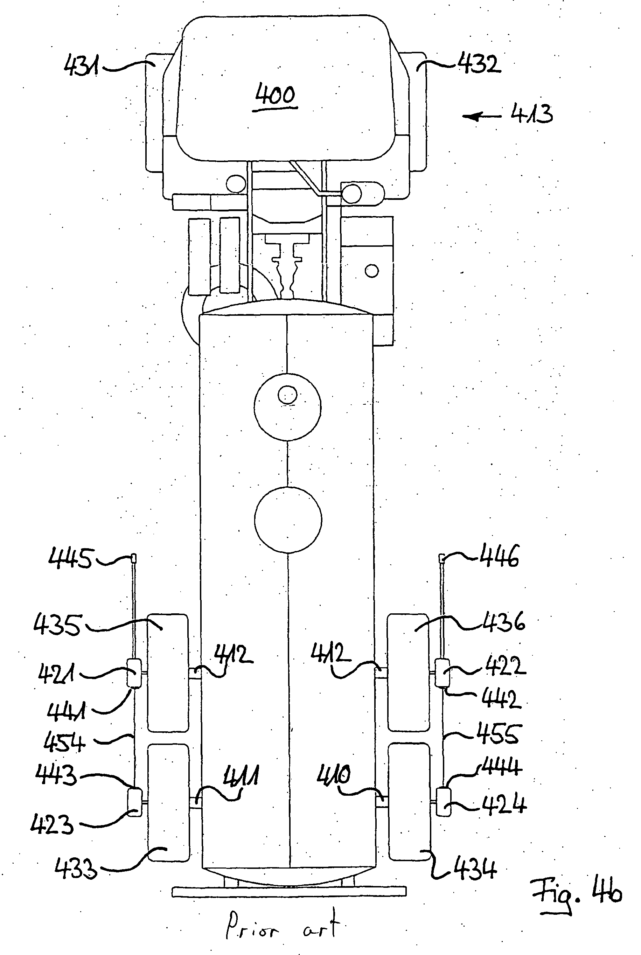

With reference to Fig. 4a and Fig. 4b, the necessary steps of a conventional alignment procedure will be described by way of the following example. Accordingly, the six wheels 431, 432, 433, 434, 435, 436 of a truck 400 having three axles 411, 412, 413 have to be measured and respective aligned, if necessary. First of all, in Fig. 4a, in the tandem constituted by the two rear axles 411, 412, the rear most (often non-adjustable) axle 411 is selected as a reference axle 410. Then, a first set (pair) of aligner heads 421, 422 is mounted at wheels 431, 432 of the steering axle 413 and a second set of aligner heads 423, 424 at wheels 433, 434 of the reference axle 410. Now, the thrust angle of the reference axle is measured and, if possible', corrected (not illustrated in the Figs.). At this point, the steering axle 413 can be aligned with the reference axle 410. The required data for alignment of the steering axle 413 with the reference axle 410 is collected by correlation of the measured angles by the corresponding goniometers of all measuring sensors 441, 442, 443, 444, 445, 446 mounted on the four wheels 431, 432, 433, 434 of the truck 400. Here it is to be noted that some alignment data, e.g. for determining camber, may also be measured with different or additional sensors alike magneto-resistive tilt sensors.

For that purpose, measuring light beams are transmitted on the light paths 451 and 452, respectively, between the aligner heads 423 and 421 as well as between the aligner heads 424 and 422, and on the light path 453 between the sensors 445 and 446. For further details of the operation and use of the conventional wheel alignment measuring apparatus and method reference is made to US 5,056,233 "Method and apparatus for measuring cross-toe" and US 4,341,021 "Wheel alignment measuring apparatus".

Subsequently, the first set of aligner heads 421, 422 attached to the steering axle 413 has to be detached and moved to the second, not aligned, axle 412 in the tandem. The resulting configuration is shown in Fig. 4b. Finally, the second tandem axle 412 can be aligned with the reference axle 410. Again, the required data for alignment of the second tandem axle 412 with the reference axle 410 is collected by correlation of the measured angles by the corresponding goniometers of the measuring sensors 441, 442, 443, 444 mounted on the four wheels 433, 434, 435, 436 of the truck 400. Therefore, respective measuring light beams 454 and 455, respectively, are transmitted between the aligner heads 423, 421 and between the aligner heads 424, 422, respectively.

The with reference to Fig. 4a and 4b described conventional way for performing wheel alignment on vehicles having multiple axles has several drawbacks. First, this conventional alignment procedure is time consuming because for the third and further axle alignment sensors, i.e. aligner heads, have to be moved. Further, the measuring range of the respective light beam emitting functionality and the respective light beam receiving functionality within two interacting conventional aligner heads on each side of a vehicle have to be designed for the maximum required measuring range, i.e. up to 15 meters in the case of very long wheel base heavy duty vehicles. In such cases high power light emitting devices, e.g. laser diodes, are required. This results in critical total power consumption, especially on wireless battery-powered systems.

It is therefore an objective of the present invention to enable wheel alignment without the afore-mentioned drawbacks. In particular, it is a further objective of the present invention to have a wheel alignment system for vehicles having three or more axles, which does not need moving of alignment sensors.

The above-mentioned objectives are solved by a wheel aligner head according to claim 1. The above-mentioned objective regarding the system is solved by a system according to claim 3. The above-mentioned objectives are further solved by a method according to claim 7.

The general idea of the new wheel alignment approach according to an embodiment is to have a six-heads (or more) alignment system - with 12 or 10 sensors, e.g. optical CCD sensors - in order to collect the required alignment data for all relevant wheels at the same time. As a major advantage it is possible to perform a total wheel alignment in one step, i.e. there is no need of moving wheel aligner heads from one axle to another axle. Further, a whole picture of all wheels of such multiple axle vehicles is available once the aligner heads are mounted to all wheels of a vehicle according to the embodiment.

As to said intermediate wheel aligner head, it is attachable to a wheel of a vehicle having at least three axles, of which one is a front axle, one is a rear axle and other ones are intermediate axles, said intermediate wheel aligner head being designated to be attached at a wheel of an intermediate axle and said first direction is towards said front axle and said second direction is towards said rear axle. In one embodiment, each of said first and second alignment measurement functionalities of said intermediate wheel aligner head comprise at least optical sensors configured to function as a goniometer and light beam emitting means for emitting a light beam in said respective direction.

As to said system, said first and said second next wheel aligner heads may be mounted at an adjacent axle of said vehicle with respect to said intermediate axle, at which said respective intermediate aligner head is attached It is also possible that said vehicle comprises a tractor and a tender and said front axle is at said tractor and said rear axle is at said tender.

The invention will be more completely understood in consideration of the following detailed description of various embodiments of the invention in connection with the accompanying drawings, in which:
- Fig. 1: shows a top view onto a conventional aligner head according to the prior art, attached to a rim of a wheel of a motor vehicle;
- Fig. 2: shows a top view onto a wheel aligner head according to the present invention, attached to a rim of a wheel of a motor vehicle;
- Fig. 3: shows a schematic principle of a goniometer;
- Fig. 4a: shows the first-step configuration of the alignment procedure for a three-axle vehicle according to the prior art;
- Fig. 4b: shows the second-step configuration of an alignment procedure for the three-axle vehicle of Fig. 4a according to the prior art;
- Fig. 5a: shows a first embodiment of the one-step alignment system for a three-axle vehicle using an alignment system according the present invention in a 10-sensor-configuration;
- Fig. 5b: shows a second embodiment of the one-step alignment system for a three-axle vehicle using an alignment system according the present invention in a 12-sensor-configuration; and
- Fig. 5c: shows a third embodiment of the one-step alignment system for a four-axle vehicle using an alignment system according the present invention in a 14-sensor-configuration.

While the invention is amendable to various modifications and alternative forms, specifics thereof will be shown by way of example in the drawings and will be described in detail. However, it should be understood that the intention is not to limit the invention to the particular embodiments described.

Now reference is made to Fig. 2. The general idea of the invention is to provide a special intermediate wheel aligner head 210, which comprises at least two alignment measurement functionalities 241, 242, e.g. optical CCD goniometers, directed in opposite directions 251, 252, i.e. when attached to the intermediate axles of a vehicle directed respectively to the front direction and rear direction of the vehicle. In other words: each of the two alignment measurement functionalities 241, 242 are directed towards respective sensors mounted on contiguous wheels on the same side of the vehicle.

Mounting those intermediate wheel aligner heads to intermediate axle(s) of a truck, preferably very long vehicles, it is possible to perform total wheel alignment in a one-step procedure. It is also possible, to consider more complex configurations having eight wheel aligner heads or more, in order to address special heavy vehicles with several axles. From this point of view, the invention provides an alignment system, which is modular. In other words: it is just a matter of adding two more intermediate wheel aligning heads and configure the respective alignment software accordingly. In the preferred embodiment of the invention, the alignment software has an automatic self-configuring feature.

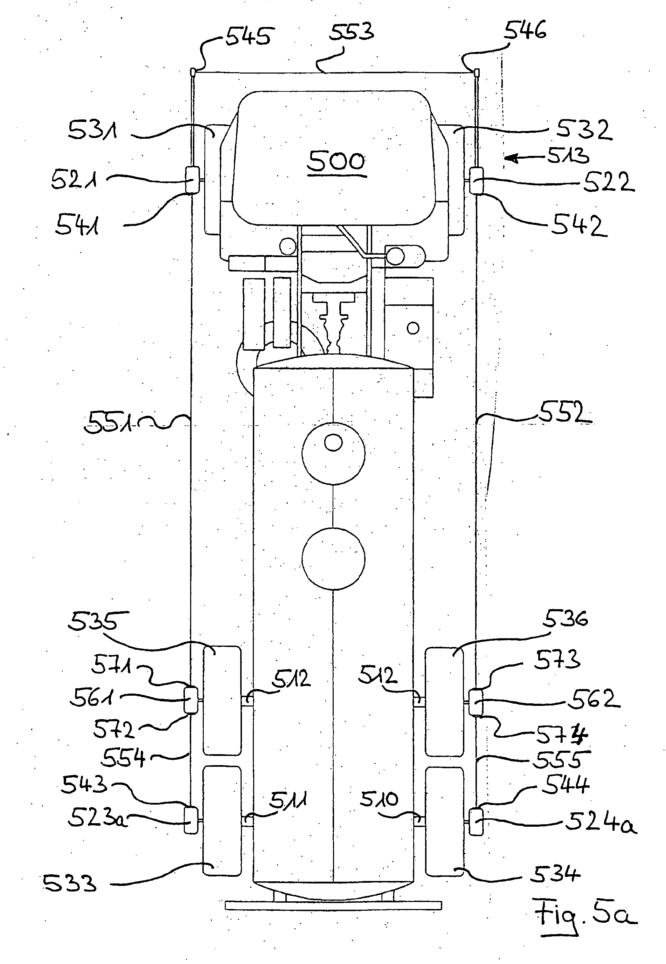

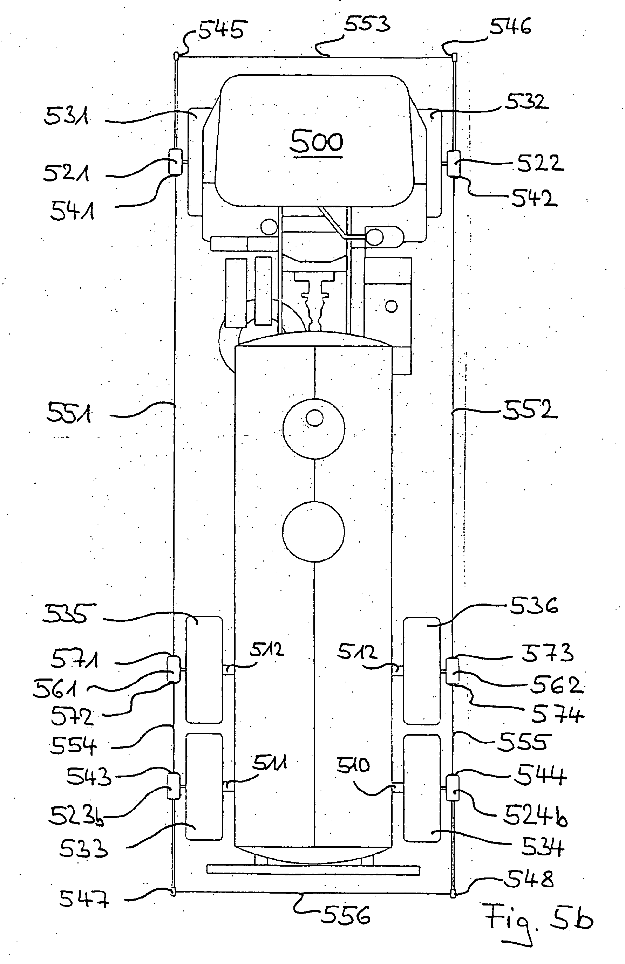

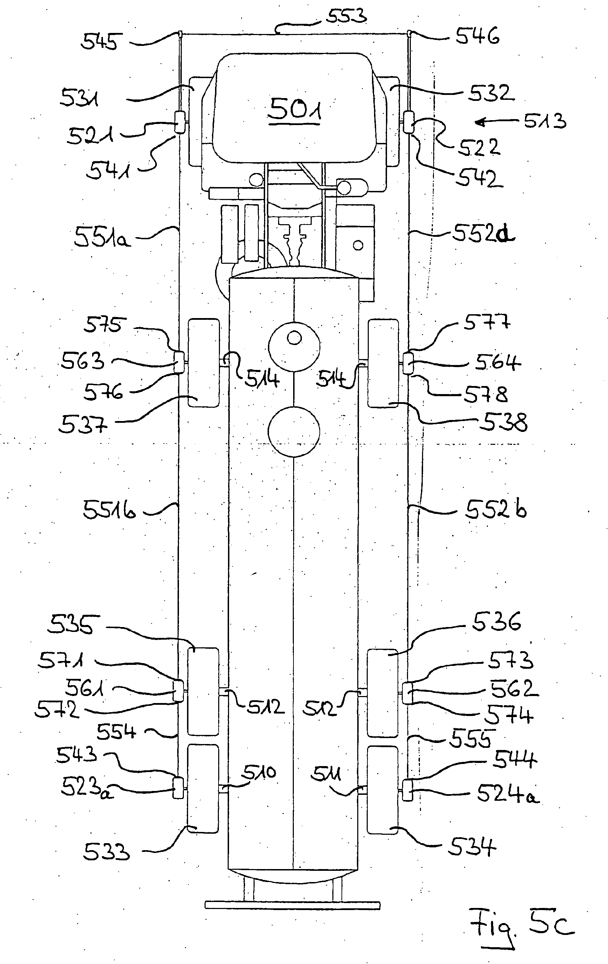

The typical wheel alignment procedure according to the present invention and the advantages therefrom will be apparent from the following embodiments of the invention described with reference to the accompanying Fig. 5a, Fig. 5b, and Fig. 5c.

Generally, in all embodiments shown in Fig. 5a, Fig. 5b, and Fig. 5c, the following one-step alignment procedure is applicable. Firstly, a respective reference axle 510 is selected in the tandem; usually, the rear most (non-adjustable) axle 511 will be selected. Then, a set of conventional wheel aligner heads 521, 522, a set of conventional wheel aligner heads 523a, 524a or a set of conventional wheel aligner heads 523b, 524b, respectively, are mounted to both the front most axle 513 and rear most axle 511. Further, required sets of intermediate wheel aligner heads 561, 562 (Figs. 5a, 5b, 5c) as well as 563, 564 (Fig. 5c) according to the invention are attached on every other (intermediate) axle 512 as well as 514 of the respective vehicle 500, 501. At this point, the thrust angle for the reference axle 511 is measured and corrected, if possible. After that, the respective steering axle 513 is aligned to the respective reference axle 510. Now, the second tandem axle 512 will be aligned to the reference axle 510. Finally, other axles, if any, e.g. axle 514 in Fig. 5c, are aligned to the respective reference axle 510.

Now reference is made to Fig. 5a, which shows a first embodiment of the one-step alignment system for a three-axle vehicle 500 using the alignment system according the present invention in a 10-sensor-configuration. Accordingly, the vehicle 500 has six wheels 531, 532, 533, 534, 535, 536 at three axles 511, 512, 513 that will be measured and respective aligned, if necessary. At the beginning, in the tandem constituted by the two rear axles 511 and 512, the rear most non-adjustable axle 511 is selected as a reference axle 510. Then, a first pair of aligner heads 521, 522 is mounted at wheels 531, 532 of the steering axle 513, a second pair of aligner heads 523, 524 is mounted at wheels 533, 534 of the reference axle 510, and a pair of intermediate aligner heads 561, 562 is mounted to the second axle 512 of the tandem.

Now, the total alignment of the vehicle 500 will be performed beginning with the measurement of the thrust angle of the reference axle 510, which is corrected, if possible (not illustrated in Fig. 5a). Then, the steering axle 522 will be aligned with the reference axle 510. The required data for alignment of the steering axle 522 with the reference axle 510 is collected by correlation of the measured angles by the corresponding goniometers of all measuring sensors 541, 542, 543, 544, 545, 546, 571, 572, 573, 574 mounted on all of the six wheels 531, 532, 533, 534, 535, 536 of the truck 500. For that purpose measuring light beams are transmitted on the light path 551 between the aligner heads 521 and 561, on the light path 552 between the aligner heads 522 and 562, on the light path 553 between the aligner heads 521 and 522, on the light path 554 between the aligner heads 561 and 523, and on the light path 555 between the aligner heads 562 and 524. The measuring light beams on the light path 553 between the sensors 545 and 546 are used for checking whether the wheels of the steering axle 513 are directed straight forward and also that neither a toe-in or toe-out is present.

Subsequently, the second tandem axle 512 will be aligned with the reference axle 510. Again, the required data for alignment of the second tandem axle 512 with the reference axle 510 is collected by correlation of the measured angles of the respective sensors. Therefor, the measuring sensor 572 at the intermediate aligner head 561 interacts with the measuring sensor 543 at the aligner head 523. Further, the measuring sensor 574 at the intermediate aligner head 562 interacts with the measuring sensor 544 at the aligner head 524. Therefore, respective measuring light beams are trained on the respective light paths 554 and 555 transmitted between aligner heads 523 and 524 and between aligner heads 562 to 524, respectively.

Now reference is made to Fig. 5b showing a second embodiment of the one-step alignment system for a three-axle vehicle using the alignment system according the present invention in a 12-sensor-configuration. For avoidance of undue reiteration, only the difference and alteration in Fig. 5b in comparison to Fig. 5a will be described in the following. In Fig. 5b instead of the aligner heads 523a and 524a there are used aligner heads 523b and 524b at the rear most axle 511 of the vehicle 500. The aligner heads 523b and 524b are of the same type as the aligner heads 521 and 522. That is that these aligner heads 523b and 524b comprises additional sensors 547 and 548, respectively, which leads to a closed 360-degrees alignment system by means of the additional measuring path 556.

As to Fig. 5c that shows a third embodiment of the one-step alignment system for a four-axle vehicle 501 using the alignment system according the present invention in a 14-sensor-configuration. Again, for sake of brevity, only the difference and alterations in Fig. 5c in comparison to Fig. 5a will be described in the following. As to the major difference of the vehicle 501 of Fig. 5c compared to vehicle 500 of Fig. 5a and 5b is the fact that there is an additional axle 514, i.e. the vehicle 501 has four axles in total with eight wheels to be aligned. By the embodiment of Fig. 5c, the advantage of the modular and scalable alignment system according to the invention will be apparent. For the additional axle 514 there is an additional set of intermediate aligner heads 563 and 564. From another point of view, the intermediate aligner heads 563 and 564, respectively, according to the invention act as bridge between the aligner heads 521, 561, and the aligner heads 522, 562, respectively. Thus, again it will be possible to measure and align all wheels of the vehicle 501 without the need of moving aligner heads, at all.

In short, the advantages of the new special intermediate aligner head and the respective alignment system have become clear from the presented embodiments. As already mentioned above, the major advantage it is the possibility to perform a total wheel alignment in a one-step configuration, i.e. there is no need of moving wheel aligner heads from one axle to another axle. Further, by use of the special intermediate aligner heads of the invention the working/measuring-range of the wheel aligning system is increased, because the intermediate wheel aligner heads act as a bridge. Thus, a reduction of the minimum emitting and measuring range required for a single aligner head is accomplished. Moreover, the aligning system of the invention is modular and scalable: the user can upgrade the system to a more complex one just by adding a set (pair) of intermediate wheel aligner heads.

## Claims

1. Intermediate wheel aligner head (210; 561, 562; 561, 562, 563, 564) for use in wheel alignment service for a vehicle (500; 501) having at least three axles (511, 512, 513; 511, 512, 513, 514), of which one is a front axle (513), one is a rear axle (511) and at least one is an intermediate axle (512; 512, 514),
said intermediate wheel aligner head (210; 561, 562; 561, 562, 563, 564)
- being attachable to a wheel (231; 535, 536, 535, 536, 537, 538) of the vehicle (500; 501),
- comprising two alignment measurement functionalities directed in opposite directions (251, 252), wherein a first alignment measurement functionality (241; 571, 573; 571, 573, 575, 577) is directed in a first direction (251) towards the front axle (513), and a second alignment measurement functionality (242; 572, 574; 572, 574, 576, 578) is directed in a second direction (252) towards the rear axle (511),
**characterized in that** said intermediate wheel aligner head (210; 561, 562; 561, 562, 563, 564) is
- for being attached to a wheel (231; 535, 536; 535, 536, 537, 538) of the at least one intermediate axle (512; 512, 514), and
- is configured to interact at the same time with two other wheel aligner heads attached to the front axle (513), the rear axle (511) or another intermediate axle (512; 512, 514) by means of the first alignment measurement functionality (571, 573; 571, 573, 575, 577) and the second alignment measurement functionality (572, 574; 572, 574, 576, 578), wherein each of said first alignment measurement functionalities (241; 571, 573; 571, 573, 575, 577) and second alignment measurement functionalities (242; 572, 574; 572, 574, 576, 578) comprise at least optical sensors configured to function as a goniometer and light beam emitting means for emitting a light beam in said respective direction,
so that the first alignment measurement functionality (571, 573; 571, 573, 575, 577) can interact with a first next wheel aligner head (521, 522; 521, 522, 563, 564) attached to an axle (513; 513, 514) adjacent to the at least one intermediate axle in direction of said front axle (513) and the second alignment measurement functionality (572, 574; 572, 574, 576, 578) can interact with a second next wheel aligner head (523a, 524a; 523b, 524b; 523a, 524a, 561, 562) attached to an axle (511; 511; 512) adjacent to the at least one intermediate axle in direction of the rear axle (511).

2. Measurement system for performing wheel alignment on vehicles (500; 501) having three or more axles (511, 512, 513; 511, 512, 513, 514), of which one is a front axle (513), one is a rear axle (511) and at least one is an intermediate axle (512; 512, 514),
said system comprising wheel aligner heads (521, 522, 523a, 524a, 561, 562; 521, 522, 523b, 524b, 561, 562; 521, 522, 523a, 524a, 561, 562, 563, 564) attachable to wheels (531, 532, 533, 534, 535, 536; 531, 532, 533, 534, 535, 536, 537, 538) of said vehicle (500, 501), of which intermediate aligner heads (561, 562; 561, 562, 563, 564) attachable to the at least one intermediate axle (512; 512, 514) are in accordance with claim 1.

3. System according to claim 2,
wherein two wheel aligner heads (521, 522) attachable to the front axle (513) and/or two wheel aligner heads (523b, 524b) attachable to the rear axle (511) each comprise two further optical sensors (541 to 548) which are adapted for measuring by means of an respective additional measuring path (553, 556) between the respective two wheel aligner heads (521, 522) when attached to the front axle (513) and between the respective two wheel aligner heads (523b, 524b) when attached to the rear axle (511), respectively.

4. System according to claim 3,
wherein the system comprises the two wheel aligner heads (521, 522) attachable to the front axle (513) and the two wheel aligner heads (523b, 524b) attachable to the rear axle (511) each comprising the two further optical sensors (541 to 548) adapted for measuring by means of the respective additional measuring path (553, 556) such that the system is a closed 360-degrees alignment system.

5. System according to one of the claims 2 to 4, wherein said vehicle comprises a tractor and a tender and said front axle is at said tractor and said rear axle is at said tender.

6. Method for total wheel alignment of vehicles having three or more axles (511, 512, 513), of which one is a front axle (513), one is a rear axle (511) and at least one is an intermediate axle (512),
said method comprising the steps:
- selecting a reference axle (510) from the axles (511, 512, 513);
- mounting wheel aligner heads (521, 522; 523a, 524a; 523b, 524b) to said front axle (513) and said rear axle (511);
- mounting at least one intermediate wheel aligner head (561, 562; 563, 564) according to one of the claims 1 or 2 to said at least one intermediate axle (512);
- performing alignment of said front axle (513) to the reference axle (510); and
- performing alignment of said intermediate axle (512) to the reference axle (510),
wherein the alignment of said front axle (513) and of said at least one intermediate axle (512) is performed at the same time without moving any wheel aligner head (521, 522; 523a, 524a; 523b, 524b; 561, 562; 563, 564) from one axle (511, 512, 513) of the vehicle to another axle (511, 512, 513).

## Patentansprüche

1. Zwischenachsvermessungskopf (210; 561, 562; 561, 562, 563, 564) für die Verwendung bei einer Achsvermessungsdienstleistung für ein Fahrzeug (500; 501) mit wenigstens drei Achsen (511, 512, 513; 511, 512, 513, 514), von denen eine eine Vorderachse (513) ist, eine eine Hinterachse (511) ist, und wenigstens eine eine Zwischenachse (512; 512, 514) ist,
wobei der Zwischenachsvermessungskopf (210; 561, 562; 561, 562, 563, 564)
- an einem Rad (231; 535, 536; 535, 536, 537, 538) des Fahrzeugs (500; 501) anbringbar ist,
- zwei Vermessungsfunktionalitäten umfasst, die in entgegengesetzte Richtungen (251, 252) gerichtet sind, wobei eine erste Vermessungsfunktionalität (241; 571, 573; 571, 573, 575, 577) in einer ersten Richtung (251) zu der Vorderachse (513) gerichtet ist und eine zweite Vermessungsfunktionalität (242; 572, 574; 572, 574, 576, 578) in eine zweite Richtung (252) zu der Hinterachse (511) gerichtet ist,
**dadurch gekennzeichnet, dass** der Zwischenachsvermessungskopf (210; 561, 562; 561,562,563,564)
- dazu dient, an einem Rad (231; 535, 536; 535, 536, 537, 538) der wenigstens einen Zwischenachse (512; 512, 514) angebracht zu werden, und
- dafür konfiguriert ist, gleichzeitig mit zwei anderen Achsvermessungsköpfen, die an der Vorderachse (513), der Hinterachse (511) oder einer weiteren Zwischenachse (512; 512, 514) angebracht sind, mittels der ersten Vermessungsfunktionalität (571, 573; 571, 573, 575, 577) und der zweiten Vermessungsfunktionalität (572, 574; 572, 574, 576, 578) zusammenzuwirken, wobei jeweils die erste Vermessungsfunktionalität (241; 571, 573; 571, 573, 575, 577) und die zweite Vermessungsfunktionalität (242; 572, 574; 572, 574, 576, 578) wenigstens optische Sensoren, die dafür konfiguriert sind, als Goniometer zu arbeiten, und Lichtstrahlemissionsmittel zum Emittieren eines Lichtstrahls in der jeweiligen Richtung umfassen,
so dass die erste Vermessungsfunktionalität (241; 571, 573; 571, 573, 575, 577) mit einem ersten nächsten Achsvermessungskopf (521, 522; 521, 522, 563, 564) zusammenwirken kann, der an einer Achse (513; 513, 514) neben der wenigstens einen Zwischenachse in Richtung der Vorderachse (513) angebracht ist, und die zweite Vermessungsfunktionalität (242; 572, 574; 572, 574, 576, 578) mit einem zweiten nächsten Achsvermessungskopf (523a, 524a; 523b, 524b; 523a, 524a, 561, 562) zusammenwirken kann, der an einer Achse (511; 511, 512) neben der wenigstens einen Zwischenachse in Richtung zu der Hinterachse (511) angebracht ist.

2. Messsystem zum Durchführen einer Achsvermessung an Fahrzeugen (500; 501) mit drei oder mehr Achsen (511, 512, 513; 511, 512, 513, 514), von denen eine eine Vorderachse (513) ist, eine eine Hinterachse (511) ist, und wenigstens eine eine Zwischenachse (512; 512, 514) ist,
wobei das System Achsvermessungsköpfe (521, 522, 523a, 524a, 561, 562; 521, 522, 523b, 524b, 561, 562; 521, 522, 523a, 524a, 561, 562, 563, 564) umfasst, die an Rädern (531, 532, 533, 534, 535, 536; 531, 532, 533, 534, 535, 536, 537, 538) des Fahrzeugs (500, 501) anbringbar sind, und von denen Zwischenvermessungsköpfe (561, 562; 561, 562, 563, 564), die an der wenigstens einen Zwischenachse (512; 512, 514) anbringbar sind, gemäß Anspruch 1 beschaffen sind.

3. System nach Anspruch 2,
wobei zwei Achsvermessungsköpfe (521, 522), die an der Vorderachse (513) anbringbar sind und/oder zwei Achsvermessungsköpfe (523b, 524b), die an der Hinterachse (511) anbringbar sind, jeweils zwei weitere optische Sensoren (541 bis 548) umfassen, die dafür ausgelegt sind, mittels eines jeweiligen zusätzlichen Messweges (553, 556) zwischen den jeweils zwei Achsvermessungsköpfen (521, 522), wenn diese an der Vorderachse (513) angebracht sind, beziehungsweise zwischen den jeweils zwei Achsvermessungsköpfen (523b, 524b), wenn diese an der Hinterachse (512) angebracht sind, zu messen.

4. System nach Anspruch 3,
wobei das System die zwei Achsvermessungsköpfe (521, 522), die an der Vorderachse (513) anbringbar sind, und die zwei Achsvermessungsköpfe (523b, 524b), die an der Hinterachse (511) anbringbar sind, umfasst, die jeweils die zwei weiteren optischen Sensoren (541 bis 548) umfassen, die dafür ausgelegt sind, mittels des jeweils zusätzlichen Messweges (553, 556) zu messen, so dass das System ein geschlossenes 360-Grad-Vermessungssystem ist.

5. System nach einem der Ansprüche 2 bis 4, wobei das Fahrzeug eine Zugmaschine und einen Auflieger umfasst, und wobei sich die Vorderachse an der Zugmaschine befindet und sich die Hinterachse an dem Auflieger befindet.

6. Verfahren für eine Gesamtachsvermessung von Fahrzeugen mit drei oder mehr Achsen (511, 512, 513), von denen eine eine Vorderachse (513) ist, eine eine Hinterachse (511) ist, und wenigstens eine eine Zwischenachse (512) ist,
wobei das Verfahren die Schritte umfasst:
- Wählen einer Referenzachse (510) unter den Achsen (511, 512, 513);
- Montieren von Achsvermessungsköpfen (521, 522; 523a, 524a; 523b, 524b) an der Vorderachse (513) und der Hinterachse (511);
- Montieren wenigstens eines Zwischenachsvermessungskopfes (561, 562; 563, 564) nach einem der Ansprüche 1 oder 2 an der wenigstens einen Zwischenachse (512);
- Durchführen einer Vermessung der Vorderachse (513) bezüglich der Referenzachse (510); und
- Durchführen einer Vermessung der Zwischenachse (512) bezüglich der Referenzachse (510),
wobei die Vermessung der Vorderachse (513) und der wenigstens einen Zwischenachse (512) gleichzeitig durchgeführt wird, ohne irgendeinen Achsvermessungskopf (521, 522; 523a, 524a; 523b, 524b; 561, 562; 563, 564) von einer Achse (511, 512, 513) des Fahrzeugs zu einer weiteren Achse (511, 512, 513) zu bewegen.

## Revendications

1. Tête (210 ; 561, 562 ; 561, 562, 563, 564) d'aligneur de roues intermédiaire, à utiliser dans un service d'alignement de roues pour un véhicule (500 ; 501) ayant au moins trois essieux (511, 512, 513 ; 511, 512, 513, 514) dont l'un est un essieu (513) avant, l'un est un essieu (511) arrière et au moins l'un est un essieu (512 ; 512, 514) intermédiaire,
la tête (210 ; 561, 562 ; 561, 562, 563, 564) d'aligneur de roues intermédiaire
- pouvant être adjointe à une roue (231 ; 535, 536, 535, 536, 537, 538) du véhicule (500 ; 501),
- comprenant deux fonctionnalités de mesure d'alignement dirigées dans des sens (251, 252) opposés, une première fonctionnalité (241 ; 571, 573 ; 571, 573, 575, 577) de mesure d'alignement étant dirigée dans un premier sens (251) allant vers l'essieu (513) avant et une deuxième fonctionnalité (242 ; 572, 574 ; 572, 574, 576, 578) de mesure d'alignement étant dirigée dans un deuxième sens (252) allant vers l'essieu (511) arrière,
**caractérisée en ce que** la tête (210 ; 561, 562 ; 561, 562, 563, 564) intermédiaire d'aligneur de roue est
- destinée à être adjointe à une roue (231 ; 535, 536, 535, 536, 537, 538) du au moins un essieu (512 ; 512, 514) intermédiaire, et
- est configurée pour interagir en même temps avec deux autres têtes d'aligneur de roues adjointes à l'essieu (513) avant, à l'essieu (511) arrière ou à un autre essieu (512 ; 5123, 514) intermédiaire au moyen de la première fonctionnalité (571, 573 ; 571, 573, 575, 577) de mesure d'alignement et de la deuxième fonctionnalité (572, 574 ; 572, 574, 576, 578) de mesure d'alignement, chacune des premières fonctionnalités (241 ; 571, 573 ; 571, 573, 575, 577) de mesure d'alignement et des deuxièmes fonctionnalités (242 ; 572, 574 ; 572, 574, 576, 578) de mesure d'alignement comprenant au moins des capteurs optiques configurés pour fonctionner en goniomètre et des moyens d'émission de faisceau lumineux pour émettre un faisceau lumineux dans le sens respectif,
de sorte que la première fonctionnalité (571, 573 ; 571, 573, 575, 577) de mesure d'alignement peut interagir avec une première tête (521, 522 ; 521, 522, 563, 564) suivante d'aligneur de roues adjointe à un essieu (513 ; 513, 514) voisin du au moins un essieu intermédiaire dans la direction de l'essieu (513) avant et que la deuxième fonctionnalité (572, 574 ; 572, 574, 576, 578) de mesure d'alignement peut interagir avec une deuxième tête (523a, 524a ; 523b, 524b ; 523a, 524a, 561, 562) suivante d'aligneur de roues adjointe à un essieu (511 ; 511 ; 512) voisin du au moins un essieu intermédiaire dans le sens de l'essieu (511) arrière.

2. Système de mesure pour effectuer un alignement de roues sur des véhicules (500 ; 501) ayant trois ou plusieurs essieux (511, 512, 513 ; 511, 512, 513, 514) dont l'un est un essieu (513) avant, l'un est un essieu (511) arrière et au moins l'un est un essieu (512 ; 512, 514) intermédiaire,
le système comprenant des têtes (521, 522, 523a, 524a, 561, 562 ; 521, 522, 523b, 524b, 561, 562 ; 521, 522, 523a, 524a, 561, 562, 563, 564) d'aligneur de roues pouvant être adjointes à des roues (531, 532, 533, 534, 535, 536 ; 531, 532, 533, 534, 535, 536, 537, 538) du véhicule (500, 501), tête (561, 562 ; 561, 562, 563, 564), dont des têtes (561, 562 ; 561, 562, 563, 564) d'aligneur intermédiaire, pouvant être adjointes au au moins un essieu (512 ; 512, 514) intermédiaire, sont suivant la revendication 1.

3. Système suivant la revendication 2,
dans lequel deux têtes (521, 522) d'aligneur de roues pouvant être adjointes à l'essieu (513) avant et/ou deux têtes (523b, 524b) d'aligneur de roues pouvant être adjointes à l'essieu (511) arrière comprennent chacune deux autres capteurs (541, 548) optiques qui sont conçus pour mesurer, au moyen d'un trajet (553, 556) supplémentaire respectif de mesure entre les deux têtes (521, 522) d'aligneur de roues respectives lorsqu'elles sont adjointes à l'essieu (513) avant et entre les deux têtes (523b, 524b) d'aligneur de roues respectives lorsqu'elles sont adjointes à l'essieu (511) arrière respectivement.

4. Système suivant la revendication 3,
dans lequel le système comprend les deux têtes (521, 522) d'aligneur de roues pouvant être adjointes à l'essieu (513) avant et les deux têtes (523b, 524b) d'aligneur de roues pouvant être adjointes à l'essieu (511) arrière, chacune comprenant les deux autres capteurs (541 à 548) optiques conçus pour mesurer, au moyen du trajet (553, 556) supplémentaire respectif de mesure, de manière à ce que le système soit un système d'alignement fermé sur 360 degrés.

5. Système suivant l'une des revendications 1 à 4, dans lequel un véhicule comprend un tracteur et un ravitailleur et l'essieu avant est dans le tracteur et l'essieu arrière est dans le ravitailleur.

6. Procédé d'alignement total de roues de véhicule ayant trois ou plusieurs essieux (511, 512, 513) dont l'un est un essieu (513) avant, l'un est un essieu (511) arrière et au moins l'un est un essieu (512) intermédiaire,
le procédé comprenant les stades dans lesquels :
- on sélectionne un essieu (510) de référence parmi les essieux (511, 512, 513) ;
- on monte des têtes (521, 522 ; 523a, 524a ; 523b, 524b) d'aligneur de roues sur l'essieu (513) avant et sur l'essieu (511) arrière ;
- on monte au moins une tête (561, 562 ; 563, 564) d'aligneur de roues intermédiaire suivant l'une des revendication 1 ou 2 sur le au moins un essieu (512) intermédiaire ;
- on effectue un alignement de l'essieu (513) avant à l'essieu (510) de référence ; et
- on effectue un alignement de l'essieu (512) intermédiaire à l'essieu (510) de référence,
dans lequel l'alignement de l'essieu (513) avant et du au moins un essieu (512) intermédiaire est effectué en même temps sans déplacer de tête (521, 522 ; 523a, 524a ; 523b, 524b ; 561, 562 ; 563, 564) d'aligneur de roues d'un essieu (511, 512, 513) du véhicule à un autre essieu (511, 512, 513).
